# EUROPEAN PATENT APPLICATION

(11) **EP 1 843 010 A2**
(43) Date of publication of application: **10.10.2007**
(21) Application number: 07105674.1
(22) Date of filing: 04.04.2007
(51) Int. Cl.: F01D 9/04

(54) **Gas turbine compressor casing flowpath rings**

(30) Priority: 05.04.2006 US 397560
(71) Applicant: General Electric Company, Schenectady, NY 12345 (US)
(72) Inventor: Johnson, David Martin, Simpsonville, SC 29680 (US); Moree, Jeff, Greer, SC 29650 (US); Poccia, Nicholas P., Gansevoort, NY 12831 (US); Gagne, Lynn Charles, Simpsonville, SC 29681 (US); Goetze, Raymond H., Greenville, SC 29615 (US)
(74) Representative: Illingworth-Law, William Illingworth

(57) **Abstract**

A flowpath ring (26) is securable in a machined groove (24) of a gas turbine compressor stator casing (12). The ring includes a connector section (28) engageable with and shaped corresponding to the machined groove. A flowpath section (30) is disposed radially inward relative to the connector section and includes a clearance surface (32) disposed facing a turbine rotor blade (20). The flowpath section defines a blade flowpath when secured in the turbine stator casing machined groove. The use of flowpath rings facilitates flowpath repair if rotor blade tip rubs occur. Additionally, the rings enable better matching of transient thermal responses between the compressor rotor and compressor casings.

## Description

### BACKGROUND OF THE INVENTION

The present invention relates to compressor rotors and stator casings and, more particularly, to rings set in dedicated grooves in the stator casing that define the outer flowpath and that can be easily replaced in the event of rotor airfoil tip rubbing.

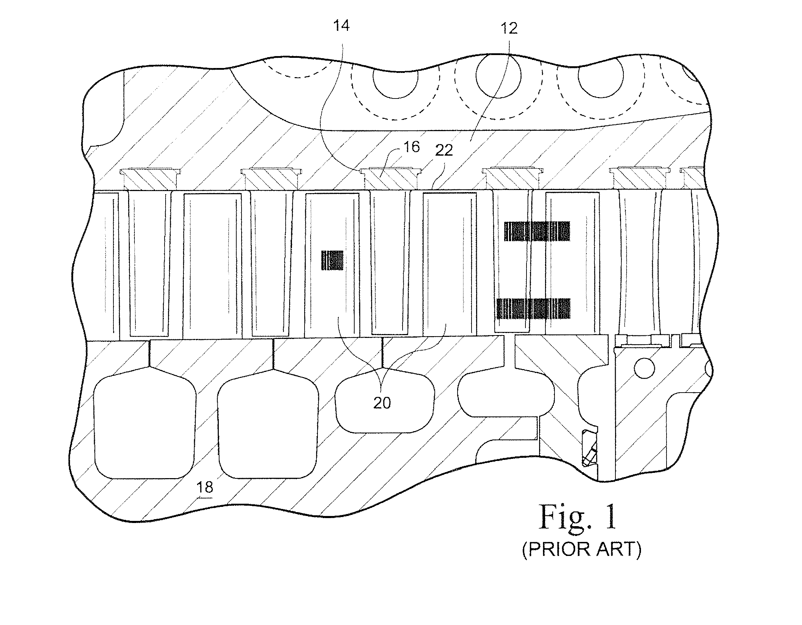

With reference to FIG. 1, showing a cross-sectional view of a typical gas turbine, gas turbines attain optimum performance when the clearance 22 between rotating blades 20 and the casing 12 is maintained at an optimal distance, which is generally very small, e.g., 40-80 mils at steady state temperatures. This clearance must be made large enough, however, to account for part stack up tolerance, mechanical and thermal growth differences between the casing 12 and the rotating airfoil 20.

A common occurrence in gas turbine compressors is rotor blades rubbing on compressor casings for various reasons. Rubbing can be caused by a number of conditions such as improper alignment between the rotor 18 and the casing, casing joint slippage at the horizontal and vertical flanges, or transient thermal response differences between the casing 12 and rotating parts. The end result is airfoil 20 tip loss and/or casing flowpath wear. These conditions lead to a loss of compressor performance and surge margin. If rubs are severe enough, the casing and rotating airfoils have to be replaced. Typically, this will result in loss of service of the gas turbine for an extended period of time.

With continued reference to FIG. 1, current industrial gas turbine compressor casings are built with circumferential slots 14 machined into the casing for stationary airfoils 16. Between the slots, the casing 12 is machined to a cylindrical or conical shape and forms the outer flowpath for the rotating blades 20. With current designs, the casing thickness is the main design variable that can be changed in an effort to thermally match the displacements of the casing 12 and rotor 18.

### BRIEF DESCRIPTION OF THE INVENTION

In an exemplary embodiment of the invention, a flowpath ring is securable in a machined groove of a compressor stator casing. The flowpath ring includes a connector section engageable with the machined groove where the connector section is shaped corresponding to the machined groove. A flowpath section is disposed radially inward relative to the connector section and includes a clearance surface disposed facing a compressor rotor blade and defining a blade flowpath when secured in the compressor stator casing machined groove.

In an another exemplary embodiment of the invention, a gas turbine compressor includes a stator casing having airfoil grooves each supporting a plurality of stator airfoils. A rotor supports a plurality of rotor blades for rotation relative to the stator casing. A plurality of the noted flowpath rings are secured in respective ring grooves in the stator casing.

### BRIEF DESCRIPTION OF THE DRAWINGS

Embodiments of the present invention will now be described, by way of example only, with reference to the accompanying drawings, in which:
FIGURE 1 is a cross-sectional view of a typical gas turbine compressor;
FIGURE 2 shows the machined stator casing including ring grooves between the stator grooves;
FIGURE 3 shows flowpath rings secured in the stator ring grooves;
FIGURE 4 illustrates the flowpath rings including air gap insulators; and
FIGURE 5 shows the flowpath ring including seals to minimize back side leakage.

### DETAILED DESCRIPTION OF THE INVENTION

It would be desirable to facilitate repairs in rotor flowpaths due to rotor airfoil tip rubbing. In this manner, optimum clearances can be restored while recovering performance and surge margin. Also, clearances can be made tighter in order to increase performance and surge margin.

By utilizing easily replaceable rings installed in the casing where the rotor blades may rub the casing, flowpath repairs can be effected rapidly and efficiently. Additionally, replaceable rings (or flowpath rings) can reduce the rate of heat transfer into the casing, thereby changing the transient and steady state matching of the rotor and casing thermal growth. This allows for a passive clearance controlling design feature that permits tighter clearances between the rotor blades and the casing, adding to overall engine performance and surge margins.

With reference to FIGS. 1-3, a gas turbine includes a stator casing 12 having a plurality of airfoil grooves 14 machined therein as is conventional. The airfoil grooves 14 are formed generally continuously in the inside circumference of the stator casing 12. The airfoil grooves 14 each support a plurality of stator airfoils 16 as is also conventional.

A rotor 18 supports a plurality of rotor blades 20 for rotation relative to the stator casing 12. As noted, gas turbines attain optimum performance when the clearance, designated by reference numeral 22, between rotating airfoils and the stator casing 12 is maintained at an optimal distance, which is generally very small (e.g., 40-80 mils at steady state temperature). A common occurrence during the operation of a gas turbine compressor is rubbing or contact between tips of the rotor blades 20 and the stator casing 12. The end result is rotor tip loss and/or casing flowpath wear, which can lead to a loss of compressor performance and surge margin. Moreover, if rubs are severe enough, the stator casing 12 and rotor blades 20 may require replacement, resulting in loss of service of the turbine for an extended period of time.

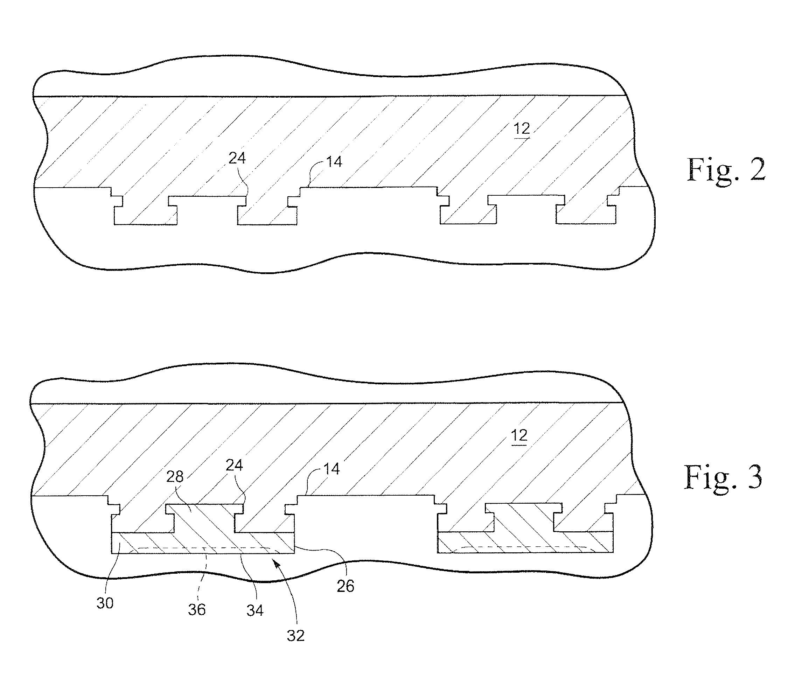

With reference to FIG. 2, the stator casing 12 is machined with additional grooves 24 preferably interposed between adjacent ones of the airfoil grooves 14. The machining process for forming the ring grooves 24 is very similar to the conventional process conducted in machining the stator airfoil grooves 14, and details of the manufacturing/machining process will not be described.

A plurality of flowpath rings 26 (FIG. 3) are secured in respective ring grooves 24 in the stator casing 12. The flowpath rings 26 include a connector section 28 shaped corresponding to the machined groove 24 and a flowpath section 30 disposed radially inward relative to the casing 12 (i.e., toward the rotor 18). The flowpath section 30 includes a clearance surface 32 disposed facing the turbine rotor blades 20 and defining a blade flowpath when the flowpath rings 26 are secured in the stator casing 12. Preferably, the flowpath rings 26 are each formed of a plurality of ring segments to minimize binding in the groove 24.

The flowpath rings 26 can be used to optimize tip clearance by using an abradable coating 34 formed on the clearance surface 32 of the flowpath rings 26. Preferably, the clearance surface 32 includes a groove 36 or the like in which the abradable coating 34 is disposed. Examples of abradable coatings that can be used for this application are aluminium silicon alloy/polymer composite, nickel/graphite composite, aluminium bronze/polymer composites. By using the abradable coating 34, the rotor blades 20 can serve to carve/cut the coating during the clearance pinch-point to attain an optimal steady state running clearance.

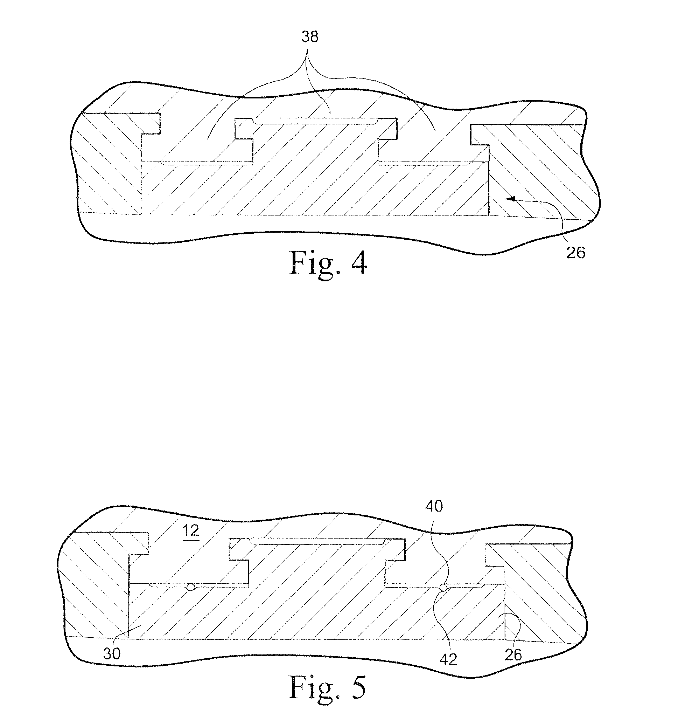

With reference to FIG. 4, the flowpath rings 26 may additionally include at least one air gap insulator 38 formed on a casing side surface as shown. The air gap insulators 38 are preferably machined as a groove in the casing side surface. An optimum air gap on the casing side of the flowpath rings 26 can serve to insulate the casing 12 from the rapid transient response of the flowpath temperature. The air gap insulators 38 control heat transfer between the flowpath rings 26 and the casing 12 to thereby control the rate of heating or cooling of the casing 12 in response to temperature changes in the flowpath. Increases to the air gap insulator 38 thickness and decreases in the surface area of the points of contact will reduce the rate of heat transfer and thus reduce the casing thermal responsiveness. These are the primary design variables which may be used to match the casing response to the rotor 18 response.

Moreover, in order to further minimize flowpath gas leakage behind the rings 26, a seal 40 (FIG. 5) may be interposed between the casing side surface of the rings 26 and the stator casing 12. As shown in FIG. 5, an additional groove or notch 42 may be formed in the casing side surface of the ring flowpath section 30 to accommodate the seal 40. Preferably, the seal 40 is formed of a metallic wire/rope or other suitable material.

Since the flowpath rings are replaceable, flowpath repairs due to rotor blade tip rubbing can be quickly facilitated in a reliable and cost effective manner. Thus, even on units with heavy rubbing, original performance and compressor surge margin can be restored. Moreover, the cycle time and associated cost to replace the flowpath rings is considerably less than to replace casings. Additionally, the flowpath rings 26 allow for a better thermal match between rotors and compressor casings, allowing a designer to better match the thermal responses and thereby run with tighter clearances. As noted, the compressor casing flowpath rings can be coated with an abradable material to allow closer clearances and an improvement in compressor performance. As would be appreciated by those of ordinary skill in the art, the flowpath rings can be installed in new units as a performance enhancement feature, particularly if combined with abradable coatings. Since the flowpath ring grooves can be machined into a stator casing in the same manner as stator slots with similar tolerance control, the flowpath rings can be accommodated with minimal cost and cycle impact on the casing.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A flowpath ring securable in a machined groove of a compressor stator casing, the flowpath ring comprising:
a connector section (28) engageable with the machined groove, the connector section being shaped corresponding to the machined groove; and
a flowpath section (30) disposed radially inward relative to the connector section, the flowpath section including a clearance surface (32) disposed facing a compressor rotor blade (20) and defining a blade flowpath when secured in the compressor stator casing machined groove (24).

2. A flowpath ring according to claim 1, wherein the flowpath ring (26) comprises a plurality of segments.

3. A flowpath ring according to claim 1, wherein the ring (26) is attachable in the compressor stator casing machined groove (24) between adjacent stator airfoils (16).

4. A flowpath ring according to claim 1, further comprising an abradable coating (34) on the clearance surface (32).

5. A flowpath ring according to claim 4, further comprising a groove (36) in the clearance surface (32), the abradable coating (34) being disposed in the groove.

6. A flowpath ring according to claim 1, further comprising at least one air gap insulator (38) disposed on a casing side surface of the flowpath ring (26).

7. A flowpath ring according to claim 6, wherein the air gap insulator (38) comprises a groove (42) formed in the casing side surface.

8. A flowpath ring according to claim 6, wherein the air gap insulator (38) further comprises a seal (40) interposable between the casing side surface of the flowpath ring and the casing.

9. A flowpath ring according to claim 1, comprising a substantially T-shaped cross-section, wherein the connector section (28) defines a stem of the T-shape, and wherein the flowpath section (30) defines a cross of the T-shape.

10. A method of assembling a stator casing, the method comprising:
machining a plurality of airfoil grooves (14) each for supporting a plurality of stator airfoils (16);
machining a plurality of ring grooves (24) interposed between adjacent ones of the airfoil grooves; and
securing a plurality of the flowpath rings (26) of claim 1 in respective ones of the ring grooves.
